# EUROPÄISCHE PATENTSCHRIFT

(11) **EP 1 170 967 B1**
(45) Veröffentlichungstag und Bekanntmachung des Hinweises auf die Patenterteilung: **22.10.2003**
(21) Anmeldenummer: 00114333.8
(22) Anmeldetag: 04.07.2000
(51) Int. Cl.: H04Q 7/32

(54) **System und Verfahren zum Betrieb eines interaktiven Servers in einem zellularen Kommunikationsnetz**
System and method for operating an interactive server in a cellular network
Système et méthode pour faire fonctionner un serveur interactif dans un réseau cellulaire

(43) Veröffentlichungstag der Anmeldung: 09.01.2002
(73) Patentinhaber: SIEMENS AKTIENGESELLSCHAFT, 80333 München (DE)
(72) Erfinder: Offer, Gero, 70186 Stuttgart (DE)

(56) Entgegenhaltungen:
- EP-A- 0 497 203
- EP-A- 0 812 120
- WO-A-97/16938
- WO-A-98/58506
- WO-A-99/37107
- WO-A-99/67958

## Beschreibung

Die Erfindung betrifft ein Telekommunikationsnetz mit einem zentralen Server eines Zugriffs- oder Dienstanbieters nach dem Oberbegriff des Anspruchs 1 und ein Betriebsverfahren für ein solches Telekommunikationsnetz.

Die Telekommunikationsnetze entwickeln sich seit Jahren von ursprünglich reinen Fernsprechnetzen zu multivalent nutzbaren Kommunikations- und Informationsnetzen. Mit der schnell zunehmenden Verbreitung der mobilen Kommunikation, die trotz der kurzen Zeitdauer ihrer Verfügbarkeit ebenfalls bereits die Grenzen der Telefonie gesprengt hat und durch die jüngst geschaffene Verbindung mit dem Internet über das Wireless Application Protocol (WAP) zu einem hochwertigen Informations- und Dienstleistungsinstrument ausgebaut wird, gewinnt auch der Wettbewerb der Netz- und Dienstanbieter neue Dimensionen. In hoher Geschwindigkeit werden neue Informationsressourcen und Dienstangebote für die Teilnehmer erschlossen.

Während in der Vergangenheit die Etablierung neuer Dienste in einem Telekommunikationsnetz die Aktualisierung von Steuerprogrammen in den Vermittlungsstellen mit entsprechend hohem Kostenaufwand und gewissen Risiken hinsichtlich der Betriebssicherheit des Netzes erforderte, werden beim Konzept des intelligenten Netzes (IN = Intelligent Network) über die reinen Vermittlungs- und Übertragungsfunktionen hinausgehende Leistungen in speziellen Netzknoten zusammengefaßt realisiert. Neue Dienste können auf dieser Grundlage zentral erbracht werden, statt wie früher in jedem Vermittlungsknoten softwaremäßig separat realisiert werden zu müssen. Dies ermöglicht die beschleunigte Einführung neuer Dienste in den Telekommunikationsnetzen und stellt die technische Basis für die erwähnte rasante Erweiterung des Angebotes an neuen Diensten - in den Mobilfunknetzen ebenso wie in den Festnetzen - dar.

Mit den oben skizzierten rasanten Entwicklungen des Leistungsspektrums der Netze kann die Hard- und Softwareausstattung der Endgeräte schon mit Blick auf eine wirtschaftlich sinnvolle Nutzungsdauer praktisch nicht mehr Schritt halten. Obgleich ständig Endgeräte (Mobiltelefone, Festnetztelefone, Faxgeräte) mit neuer, leistungsfähigerer Hard- und Software auf den Markt kommen, sind diese vielfach schon nach kurzer Zeit dem sich entwickelnden Dienstangebot des entsprechenden Netzes nicht mehr im vollen Umfang gewachsen. Daher muß in der Regel auf einen Teil der netzseitig angebotenen Leistungen auch bei neu angeschafften Geräten mitunter schon nach kurzer Zeit verzichtet werden.

In einer älteren Patentanmeldung der Anmelderin wird daher ein Verfahren zum Betrieb eines Endgerätes an einem intelligenten Netz vorgeschlagen, bei dem die Softwareausrüstung des Endgerätes betreffende Daten nach einem Vergleich mit in einer Applikationssoftware-Datenbasis gespeicherten Daten über die intelligente Peripherie des Netzes selbsttätig aktualisiert wird. Dieses Verfahren ist in seiner Anwendungsbreite noch begrenzt.

Aus der internationalen Patentanmeldung WO 97/16938 ist ein Telekommunikationsnetz bekannt, welches eine Datenbank mit Programmen zum Upgrade eines Mobiltelefons und eine Programmübertragungseinrichtung zum Laden dieser Programme auf das Mobiltelefone aufweist. Bei Anmeldung des Mobiltelefons bei dem Telekommunikationsnetz wird von dem Telekommunikationsnetz abgefragt, welche Software das Mobiltelefon enthält. Wenn in der Datenbank des Telekommunikationsnetzes geeignetere Programme als die auf dem Mobiltelefon bereits vorhandenen Programme gespeichert sind, so informiert die Programmübertragungseinrichtung das Mobiltelefon über die Möglichkeit, diese Programme auf das Mobiltelefon zu laden. Bei Zustimmung eines Benutzers des Mobiltelefons werden die Programme auf das Mobiltelefon geladen.

Der Erfindung liegt die Aufgabe zugrunde, ein verbessertes Telekommunikationsnetz der gattungsgemäßen Art und ein Verfahren zum Betrieb eines solchen anzugeben, die insbesondere eine flexible Aktualisierung der Softwareausstattung der am Netz betriebenen Endgeräte in Anpassung an bestimmte Angebote sowie an die spezifischen Wünsche des jeweiligen Nutzers ermöglicht.

Diese Aufgabe wird hinsichtlich ihres Vorrichtungsaspektes durch ein Telekommunikationsnetz mit den Merkmalen des Anspruchs 1 und hinsichtlich ihres Verfahrensaspektes durch ein Verfahren mit den Merkmalen des Anspruchs 15 gelöst.

Die Erfindung schließt den grundlegenden Gedanken ein, ein Herunterladen von Software und/oder Daten von einem zentralen Server eines Zugriffs- oder Dienstanbieters im Netz auf die Endgeräte in einem interaktiven Steuerungsvorgang mittels einer verteilten Steuerung vorzunehmen, die Funktionskomponenten des Servers und Komponenten der Endgeräte einschließt. Weiter schließt die Erfindung den Gedanken ein, daß selbsttätig jeweils beim Einloggen eines Endgerätes in das Netz oder periodisch (d. h. zu vorbestimmten Zeitpunkten oder in vorgegebenen Zeitabständen) eine Abfrage der aktuellen Hard- und Softwarekonfiguration und im Ansprechen hierauf die Übertragung eines die aktuelle Konfiguration kennzeichnenden Codes bzw. Datensatzes durchgeführt wird. Hierdurch wird gesichert, daß den Nutzern regelmäßig Downloads angeboten werden können, die auf ihr spezielles Endgerät abgestimmt sind und eine bessere Nutzung der Netzressourcen oder die Realisierung zusätzlicher Funktionen ihres Endgerätes erlauben.

Im Rahmen der vorgeschlagenen Lösung sollen insbesondere auch verschiedenartige Nutzungskonditionen (zeitlimitierte Nutzung, Nutzung mit Werbeeinblendungen, Einmal-Zahlung, nutzungsabhängige Zahlung etc.) für die Nutzer angeboten werden. In der entsprechenden Netz- bzw. Verfahrensausführung sind die verteilten Steuermittel daher zusätzlich zur interaktiven Bestimmung eines Vergebührungsmodus für die Downloads ausgebildet. Hierzu sind insbesondere im Server ein Vergebührungsmodus-Speicher zur Speicherung der möglichen Vergebührungsmodalitäten in Zuordnung zu den angebotenen Softwarekomponenten und Datensätzen und Vergebührungsmodus-Übertragungsmittel zur Übertragung von Identifikatoren für die möglichen Vergebührungsmodi an die Nutzer-Endgeräte sowie in diesen Vergebührungsmodus-Anzeigemittel zur Anzeige der angebotenen Vergebührungsmodi und Vergebührungsmodus-Bestätigungsmittel zur nutzerseitigen Festlegung des anzuwendenden Vergebührungsmodus vorgesehen.

Die verteilten Steuermittel umfassen vorteilhafterweise einen über den erwähnten Konfigurationscode adressierbaren Angebotsspeicher, in dessen Speicherbereichen jeweils auf eine spezifische Hard- und Softwarekonfiguration der Endgeräte abgestimmtes Software- bzw. Datenangebot (Angebotsinformation) aufgelistet ist, Angebots-Übertragungsmittel zur Übertragung der Angebotsinformation an die Endgeräge sowie eine Übertragungs-Auslöseeinheit zum Ingangsetzen des Herunterladens gewünschter Software und/oder Daten auf das jeweilige Endgerät auf Seiten des Servers sowie Angebots-Anzeigemittel zur Darstellung der Angebotsinformation und Anforderungsmittel zur Auswahl bzw. Ablehnung von angebotener Software und/oder Daten auf Seiten des Endgerätes. Durch diese Gesamtkonfiguration wird eine aktive Vermarktung von Software- und Daten-Downloads realisiert, in deren Rahmen das jeweilige Endgerät auf seine Leistungen überprüft und die jeweils möglichen Downloads in Abhängigkeit vom Nutzer- bzw. Endgeräteprofil spezifiziert angeboten werden.

In einer bevorzugten Ausführung gehört es zum vorgeschlagenen Konzept, ablehnende Reaktionen des Nutzers auf Download-Angebote im Server zu speichern, um die mehrfache Unterbreitung ein und desselben, vom Nutzer nicht gewünschten Angebotes zu verhindern. Ein mehrfaches Angebot von durch den Nutzer gewünschten (und zwischenzeitlich realisierten) Downloads wird dadurch verhindert, daß bei jedem Herunterladen von zusätzlicher Software und/oder zusätzlichen Daten natürlich die Softwarekonfiguration des Endgerätes und damit auch der diese kennzeichnende Konfigurationscode geändert wird.

Speziell zur Realisierung einer nutzungsabhängigen Vergebührung wird zweckmäßigerweise Software mit verschlüsselten Applikationscountern angeboten, die die periodische Ermittlung des Nutzungsumfangs ermöglicht. Bei dieser Ausführung erfaßt der Server eine arithmetische
Auswertungseinheit zur Auswertung der Zählerstände der Applikationscounter und in besonders vorteilhafter Weise auch eine Nutzungsinformations-Übertragungseinheit zur Übertragung von den Applikationszählerstand betreffenden Nachrichten an den jeweiligen Endgerätenutzer. Hierdurch wird eine für diesen jederzeit nachvollziehbare und daher eine hohe Nutzerakzeptanz genießende nutzungsabhängige Vergebührung ermöglicht.

In einer weiteren zweckmäßigen Ausführung, die den Teilnehmern eine nützliche Zusatzfunktion des Netzes bietet, sind im Server und in den Endgeräten verteilte Mittel zur Realisierung von Backup- und Restore-Funktionen für auf dem Endgerät hinterlegte Datensätze (Telefonbücher, Einstellungen etc.) oder Softwarekomponenten (individuelle Zusatzsoftware) vorgesehen. Hierdurch wird eine für den einzelnen Nutzer unaufwendige Möglichkeit der Datensicherung für den Fall eines Defektes oder Verlustes seines Endgerätes bereitgestellt.

Der Server weist hierzu einen Endgeräte-Betriebsdatenspeicher sowie mit diesem verbundene Betriebsdaten-Empfangs- und -Sendemittel zur Übertragung von in den Endgeräten implementierter Software und/oder Daten zum Server und im Bedarfsfall zurück zu den Endgeräten auf, und die Endgeräte umfassen auch ihrerseits entsprechende Betriebsdaten-Sende- und -Empfangsmittel. Diese Mittel sind mit den weiter oben erwähnten Steuermitteln zur Realisierung einer interaktiven Steuerung in der Weise verbunden, daß eine Backup- oder Sicherheitsdatenspeicherung im Server erst nach Auswahl eines entsprechenden Angebotes vom Zugriffs- bzw. Dienstanbieter durch den Nutzer des Endgerätes erfolgt.

Mit den erwähnten Mitteln zur Speicherung und Übertragung von Betriebsdaten (und -software) kann der Server im Netz auch als Zwischenstation beim Laden von Software und/oder Daten auf ein Endgerät von einem anderen Endgerät im Netz oder auch von einem Daten-Endgerät in einem mit dem Telekommunikationsnetz verknüpften Datennetz fungieren.

In einer weiteren vorteilhaften Ausführung der Erfindung umfaßt der Server eine Speichereinheit zur Speicherung von Gültigkeits- und/oder Berechtigungsdaten in Zuordnung zu vorbestimmten möglichen Konfigurationscodes und eine mit dieser Speichereinheit verbundene Vergleichereinheit, die die von Endgeräten beim Einloggen oder periodisch übermittelten Konfigurationscodes mit den gespeicherten Codes vergleicht. Bei geeigneter Wahl der Codierung ist hierdurch die Bestimmung der Gültigkeit von in den Endgeräten gespeicherten Software und/oder Datenbeständen bzw. der Nutzungsberechtigung des jeweiligen Nutzers für diese Software bzw. Daten möglich. Aufgrund des Überprüfungsergebnisses können über geeignete Übertragungs- und Anzeigemittel Warnungen an den Nutzer ausgegeben bzw. diesem Angebote zu einer Aktualisierung bzw. Legalisierung seiner Software- bzw. Datenbestände unterbreitet werden. Weiterhin können über den Server bestimmte Folgeaktionen beispielsweise bei Feststellung von nicht-lizensierter Software eingeleitet werden.

Die praktische Ausführung der erwähnten Steuermittel kann auf verschiedene Weise erfolgen, insbesondere durch netzspezifische Signalisierungsmittel auf Basis der SIM-Karte bzw. von Firmware und/oder von Applets bzw. Scripts.

Bei der zum Download angebotenen Software kann es sich zum einen um Softwarekomponenten bzw. Daten zur Implementierung von nicht netzgebundenen Zusatzfunktionen des Endgerätes (beispielsweise Kalenderfunktionen, Spiele etc.), zum anderen um solche zur Implementierung von im Netz oder in einem mit diesem verbundenen Datennetz verfügbaren Zusatzdiensten (WAP-Browser, Software zur Dienstadministration und zum Instant-Messaging etc.) sowie schließlich um Aktualisierungssoftware oder -daten zum Updating von bereits im Endgerät gespeicherten Software- bzw. Datenbeständen handeln.

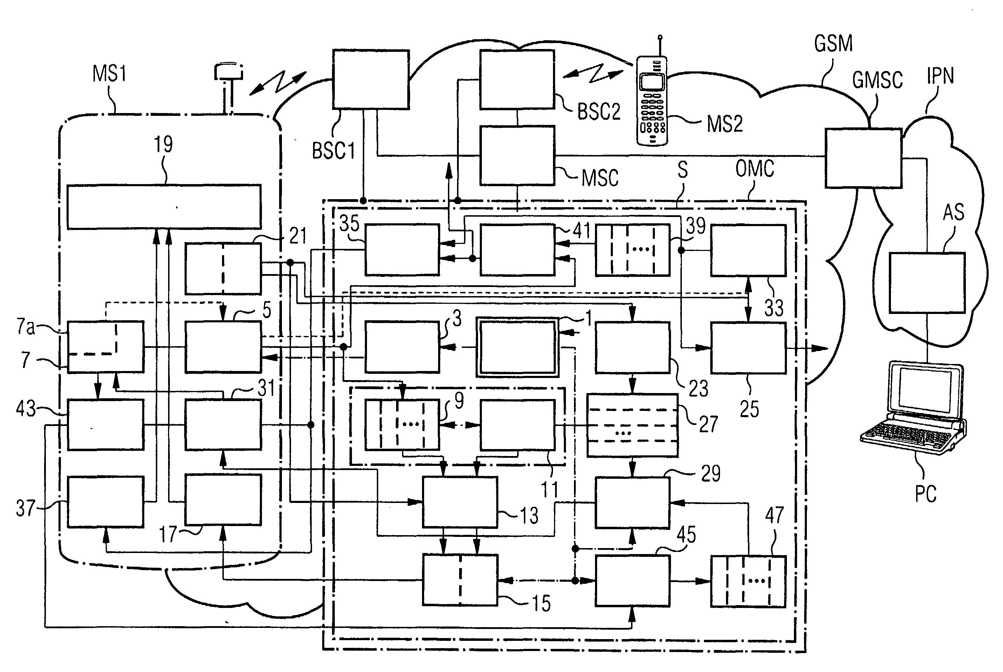

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt in einer schematischen Darstellung in Art eines Funktions-Blockschaltbildes die für die Ausführung der Erfindung wesentlichen Komponenten eines Mobiltelefons MS1 als Beispiel eines Telekommunikations-Endgerätes und eines Dienstservers S als Beispiel eines zentralen Servers in einem Mobilfunknetz GSM. Der allgemeine Aufbau des Mobilfunknetzes GSM wird als bekannt vorausgesetzt, so daß in der Figur neben dem Mobiltelefon MS1 und einem zweiten MS2 als weiterem Telekommunikations-Endgerät lediglich die beiden zugeordneten Basisstationen BSC1 und BSC2 und eine Mobilvermittlungsstelle MSC gezeigt sind. Weiterhin ist in der Figur durch die Einordnung des Dienstservers S in den Block OMC verdeutlicht, daß der Dienstserver einem Betriebs- und Wartungszentrum OMC des Mobilfunknetzes zugeordnet ist. Schließlich ist dargestellt, daß über eine Gateway-Mobilvermittlungsstelle GMSC eine Verbindung des Mobilfunknetzes mit einem IP-Netz IPN hergestellt ist, an das über einen Zugriffs-Server AS ein Datenendgerät PC angeschlossen ist.

Der Dienstserver S hat einen Controller 1 zur Ablaufsteuerung aller Funktionen, der seinerseits über die Basisstation BSC1 und die Mobilvermittlungsstelle MSC ein (durch einen eingehenden Pfeil bezeichnetes) Steuersignal empfängt, wenn sich das Mobiltelefon MS1 in das Netz einloggt. Ausgangsseitig ist der Controller 1 zunächst mit einer Abfrageeinheit 3 verbunden, die in dieser Verfahrensstufe als Konfigurationsdaten-Abfrageeinheit fungiert und ausgangsseitig mit einer Antwort-Übertragungseinheit 5 des Mobiltelefons MS1 verbunden ist und diese aktiviert. Die Antwort-Übertragungseinheit 5 ist ihrerseits eingangsseitig mit einer Programmspeichereinheit 7 des Mobiltelefons verbunden, empfängt von dieser Konfigurationsdaten, die die aktuelle Softwarekonfiguration des Mobiltelefons kennzeichnen, und adressiert mit dem Konfigurationsdatensatz eine Angebotsspeichereinheit 9 des Dienstservers S.

Die Angebotsspeichereinheit 9 hat eine Mehrzahl von (nicht einzeln bezeichneten) Speicherbereichen, denen jeweils als Adresse ein spezifischer Konfigurationsdatensatz oder -code zugeordnet ist und die jeweils ein aktuelles, auf die durch den Konfigurationscode repräsentierte Endgerätekonfiguration zugeschnittes Software-Aktualisierungsangebot des Betreibers des Dienstservers S enthalten. Der Angebotsspeichereinheit 9 ist eine Vergebührungsmodus-Speichereinheit 11 unmittelbar zugeordnet, in der in Verbindung mit dem Softwareangebot verfügbare Vergebührungsmodi aufgelistet sind. Über eine interne (nicht dargestellte) Ablaufsteuerung wird nach Adressierung eines der Speicherbereiche der Angebotsspeichereinheit 9 über den übermittelten Konfigurationscode der darin enthaltenen Angebotsliste eine Liste der relevanten Gebührenmodi zugeordnet und gemeinsam mit der Angebotsliste zur Übermittlung an das Mobiltelefon MS1 ausgegeben.

Mit den Ausgängen der Angebotsspeichereinheit 9 und der Vergebührungsmodus-Speichereinheit 11 ist eine Angebotsfiltereinheit 13 verbunden, in der vom Nutzer des Mobiltelefons bei einem früheren Angebot bereits einmal abgelehnte Angebote (Downloads) ausgefiltert werden. Auf die Funktion dieser Filtereinheit wird weiter unten noch eingegangen. Ihre Ausgänge (für Angebotsliste bzw. Vergebührungsmodus-Liste) sind mit einer Angebots-Übertragungseinheit 15 des Dienstservers S verbunden, der über den Controller 1 angesteuert wird und seinerseits ausgangsseitig mit einer Angebots-Empfangseinheit 17 des Mobiltelefons verbunden ist.

Die Angebots-Empfangseinheit 17 ist mit einer Anzeigeeinheit 19 verbunden, auf der die Angebotsliste und die verfügbaren Vergebührungsmodi für den Nutzer angezeigt werden. Der Nutzer wählt im Rahmen einer geeignet ausgebildeten Menüsteuerung mittels einer Auswahltaste 21 sowohl die zum Herunterladen gewünschte Software als auch jeweils einen zugehörigen Vergebührungsmodus aus. Die entsprechenden Ausgangssignale gelangen zu einer Übertragungs-Auslöseeinheit 23 bzw. einer Vergebührungseinheit 25 des Dienstservers S.

Die Übertragungs-Auslöseeinheit 23 ist ausgangsseitig mit einem zentralen Softwarespeicher 27 verbunden und adressiert diesen im Ansprechen auf das vom Mobiltelefon MS1 empfangene Auswahlsignal. Aus den adressierten Speicherbereichen für die einzelnen verfügbaren Softwarekomponenten wird die vom Teilnehmer gewünschte Software über eine server-seitige Software-Übertragungseinheit 29 und eine endgeräteseitige Software-Empfangseinheit 31 auf das Mobiltelefon MS1 heruntergeladen und in dessen Programmspeichereinheit 7 gespeichert. Die Vergebührungseinheit 25 speichert den seitens des Nutzers jeder gewünschten Softwarekomponente zugeordneten Vergebührungsmodus intern für die laufende Vergebührung der heruntergeladenen Software.

In einer besonders vorteilhaften Menüsteuerung ist vorgesehen, daß der Nutzer die in der Angebotsliste enthaltenen Komponenten auch jeweils einzeln mit einem Ablehnungs-Marker kennzeichnen kann. Die mit der Auswahltaste 21 verbundene (nicht gesondert dargestellte) Signalverarbeitungseinheit erzeugt dann für diese Softwarekomponenten ein Ablehnungssignal, das - ebenso wie ein positives Auswahlsignal - zum Dienstserver S übertragen wird, und zwar dort speziell zu einem Steuereingang der Angebotsfiltereinheit 13. In dieser wird aufgrund dieses Eingangssignals eine aktuelle nutzerspezifische "Filtercharakteristik" eingestellt, mit der eine Ausfilterung der vom Nutzer ausdrücklich nicht gewünschten Downloads aus der jeweils nächsten zu erstellenden Angebotsliste realisiert wird.

Für den Modus einer nutzungsabhängigen Vergebührung sind (an sich bekannte) Applikationscounter vorgesehen, die in der Figur als Bereich 7a der Programmspeichereinheit 7 symbolisiert sind. Ein periodisches Auslesen der Zählerstände wird wiederum über den Controller 1 und die Abfrageeinheit 3 initiiert, und die Zählerstände werden von den Applikationscountern 7a über die Antwort-Übertragungseinheit 5 an eine arithmetische Auswertungseinheit 33 im Dienstserver S übertragen. Diese ermittelt jeweils den im "Ablesezeitraum" angefallenen Nutzungsumfang und gibt ein entsprechendes Ausgangssignal einerseits an die Vergebührungseinheit 25 und andererseits über eine Zusatzinformations-Übertragungseinheit 35 des Dienstservers an das Mobiltelefon MS1 aus. Dort wird diese Nachricht von einer Zusatzinformations-Empfangseinheit 37 empfangen, für eine Anzeige auf der Anzeigeeinheit 19 aufbereitet und auf dieser für den Nutzer dargestellt.

Neben der erwähnten nutzungsumfangsabhängigen Gebührenerfassung ist die hier dargestelle Ausführungsform der Erfindung auch zur Überprüfung der Aktualität bzw. Gültigkeit von im Mobiltelefon MS1 implementierter Software sowie der Nutzungsberechtigung des Nutzers ausgebildet. Hierzu weist der Dienstserver einen Validierungsspeicher 39, in dem in Zuordnung zu Konfigurationsdatensätzen bzw. -codes Gültigkeits- und Berechnungsdatensätze gespeichert sind, und eine Validierungs-Vergleichereinheit auf, die über einen ersten Eingang mit dem Validierungsspeicher 39 und über einen zweiten Eingang zum Empfang der aktuellen Konfigurationsdatensätze aus dem Mobiltelefon MS1 mit dessen Antwort-Übertragungseinheit 5 verbunden ist. Im Ergebnis des Vergleiches ergibt sich eine Aussage zum Aktualitätsstatus bzw. der Gültigkeit der im Mobiltelefon implementierten Software sowie zur Berechtigung des Nutzers, diese anzuwenden. Das entsprechende Ausgangssignal der Validierungs-Vergleichereinheit 41 wird zum einen für weitere Auswertungen und ggf. die Einleitung von Aktionen aus dem Dienstserver S ausgegeben und zum anderen über die Zusatzinformations-Übertragungseinheit 35 des Servers und die Zusatzinformations-Empfangseinheit 37 des Mobiltelefons sowie dessen Anzeigeeinheit 19 für den Nutzer angezeigt.

Eine weitere nützliche Zusatzfunktion der dargestellten Ausführungsform besteht in der Möglichkeit einer Backup- bzw. Restore-Speicherung von Software und/oder Daten aus dem Mobiltelefon MS1 im Server S. Zu diesem Zweck ist im Mobiltelefon eine Backup-Übertragungseinheit 43 vorgesehen, die eingangsseitig mit der Programmspeichereinheit 7 und ausgangsseitig mit einer Backup-Empfangseinheit 45 des Dienstservers S verbunden ist. Die letztere wiederum ist mit einem Backup-Softwarespeicher 47 verbunden, der eine Mehrzahl von jeweils einem angeschlossenen Endgerät zugeordneten Speicherbereichen zur endgeräte-individuellen Backupspeicherung der relevanten Endgerätesoftware aufweist. Eine Übertragung der zu sichernden Software erfolgt jeweils beim Einloggen des Mobiltelefons, und über die Software-Übertragungseinheit 29 des Servers und die Software-Empfangseinheit 31 des Mobiltelefons kann im Bedarfsfall - wiederum gesteuert durch den Controller 1 -. eine Rück-Übertragung der im Backup-Softwarespeicher 47 gespeicherten Software in die Programmspeichereinheit 7 des Mobiltelefons erfolgen.

Die zuletzt erwähnte Ausgestaltung der Anordnung ermöglicht auch die Benutzung des Dienstservers S als Zwischenspeichereinrichtung bei der Übertragung von Softwarekomponenten und/oder Datensätzen vom zweiten Mobiltelefon MS2 oder auch von dem an das IP-Netz IPN angeschlossenen Datenendgerät PC zu dem ersten Mobiltelefon MS1 ("3th party transmission").

Die erwähnten Dienste, insbesondere der letztgenannte Dienst der Backup- bzw. Restore-Speicherung von für den Nutzer wertvollen Software- bzw. Datensätzen, wird bevorzugt als entgeltlicher Dienst angeboten und (analog wie der Download von Aktualisierungs-Software bzw. zusätzlichen Daten) im Regelfall im Ergebnis der interaktiven Verhandlung eines Angebotes mit dem potentiellen Nutzer implementiert.

## Patentansprüche

1. Telekommunikationsnetz (GSM), mit einer Mehrzahl von Endgeräten (MS1, MS2) von Nutzern mit jeweils einer vorbestimmten Hard- und Softwarekonfiguration und einem zentralen Server (S) eines Zugriffs- oder Dienstanbieters, wobei
der Server (S) Abfragemittel (3) zum Abfragen der Hard- und Softwarekonfigurationen der Endgeräte und Software-Übertragungsmittel (29) zum Laden von an die ermittelte Hard- und Softwarekonfiguration angepaßter Software und/oder Daten auf die Endgeräte und
die Endgeräte (MS1, MS2) Antwort-Übertragungsmittel (5) zum Übertragen eines die Hard- und Softwarekonfiguration bezeichnenden Konfigurationscodes an den Server im Ansprechen auf eine Abfrage der Abfragemittel und Software-Empfangsmittel (31) zum Empfang und zur internen Speicherung von übertragener Software und/oder Daten aufweisen,
die Abfragemittel und die Antwort-Übertragungsmittel zum Abfragen der Hard- und Softwarekonfiguration und zum Übertragen des Konfigurationscodes beim Einloggen des Endgerätes in das Telekommunikationsnetz oder zu vorbestimmten Zeitpunkten bzw. in vorbestimmten Zeitabständen ausgebildet sind und
im Server und den Endgeräten verteilte Steuermittel (15 bis 23) zur Implementierung einer interaktiven Steuerung der Server-Übertragungsmittel vorgesehen sind,
**dadurch gekennzeichnet, dass**
die verteilten Steuermittel (15 bis 23) zur interaktiven Bestimmung eines Vergebührungsmodus für heruntergeladene Software und/oder Daten ausgebildet sind.

2. Telekommunikationsnetz nach Anspruch 1,
**dadurch gekennzeichnet, dass**
die verteilten Steuermittel (15 bis 23) seitens des Servers (S) mit einem über den Konfigurationscode adressierbaren Angebotsspeicher (27) mit einer Mehrzahl von Angebots-Speicherbereichen, in denen jeweils ein auf eine spezifische Hard- und Softwarekonfiguration abgestimmtes Software- und/oder Datenangebot aufgelistet ist, verbunden sind und
- Angebots-Übertragungsmittel (15) zur Übertragung des Speicherinhaltes des jeweils adressierten Angebots-Speicherbereiches an ein Endgerät, welches einen Konfigurationscode übermittelt hat, und
- eine Übertragungs-Auslöseeinheit (23) zur Aktivierung der Server-Übertragungsmittel zum Laden von Software und/oder Daten aus dem abgestimmten Software- und/oder Datenangebot sowie seitens der Endgeräte (MS1, MS2)
- Angebots-Anzeigemittel (19) zur Anzeige des Speicherinhaltes des jeweils adressierten Angebots-Speicherbereiches und
- Anforderungsmittel (21) zur Auswahl von angebotener Software und/oder Daten zum Laden auf das Endgerät, die ein Anforderungssignal für gewünschte oder ein Ablehnungssignal für nicht gewünschte Software und/oder Daten an die Übertragungs-Auslöseeinheit des Servers ausgeben,
aufweisen.

3. Telekommunikationsnetz nach Anspruch 2,
**dadurch gekennzeichnet, dass**
der Server (S) Ablehnungssignal-Speichermittel (13) zur endgeräte-individuellen Speicherung von Ablehnungssignalen jeweils in Zuordnung zu übermittelten Software- und/oder Datenangeboten aufweist, wobei die Ablehnungssignal-Speichermittel dem Angebotsspeicher (27) ausgangsseitig als Filtermittel zugeordnet sind derart, daß mit einem Ablehnungssignal quittierte Software- und/oder Datenangebote demselben Nutzer nicht wiederholt angeboten werden.

4. Telekommunikationsnetz nach einem der vorhergehenden Ansprüche,
**dadurch gekennzeichnet, dass**
die verteilten Steuermittel (15 bis 23) seitens des Servers (S) mit einen dem Angebotsspeicher (27) zugeordneten Vergebührungsmodus-Speicher (11), in dem mindestens ein Vergebührungsmodus für jede angebotene Software bzw. jeden angebotenen Datensatz gespeichert ist, verbunden sind und
- mit dem Vergebührungsmodus-Speicher verbundene und auf den Empfang eines Konfigurationscodes oder eines Anforderungssignals ansprechende Vergebührungsmodus-Übertragungsmittel (15) sowie seitens der Endgeräte (MS1, MS2)
- Vergebührungsmodus-Anzeigemittel (19) zur Anzeige des mindestens einen Vergebührungsmodus für die angebotene oder ausgewählte Software und/oder die angebotenen oder ausgewählten Daten und
- Vergebührungsmodus-Bestätigungsmittel zur Festlegung des oder eines Vergebührungsmodus
aufweisen.

5. Telekommunikationsnetz nach einem der vorangehenden Ansprüche,
**dadurch gekennzeichnet, dass**
der Server (S) einen Endgeräte-Betriebsdatenspeicher (47) mit einer Mehrzahl von Speicherbereichen zur endgeräte-individuellen Backup- oder Sicherheitsspeicherung von in Endgeräten (MS1, MS2) implementierter Software und/oder Daten sowie mit diesem verbundene Betriebsdaten-Empfangs- und -Sendemittel (29, 45) zur Übertragung dieser Software und/oder Daten von und zu den Endgeräten
und die Endgeräte (MS1, MS2) Betriebsdaten-Sende- und - Empfangsmittel (31, 43) zur Übertragung dieser Software und/oder Daten zu dem und von dem Server
aufweisen.

6. Telekommunikationsnetz nach Anspruch 5,
**dadurch gekennzeichnet, dass**
die Betriebsdaten-Empfangs- und -Sendemittel (29, 31, 43, 45) des Servers (S) und der Endgeräte (MS1, MS2) mit den verteilten Steuermitteln (15 bis 23) zur Implementierung der interaktiven Steuerung verbunden sind derart, daß eine Backup- oder Sicherheitsdatenspeicherung im Server erst nach Auswahl eines entsprechenden Angebotes durch den Nutzer des Endgerätes erfolgt.

7. Telekommunikationsnetz nach einem der vorangehenden Ansprüche,
**dadurch gekennzeichnet, dass**
die verteilten Steuermittel (15 bis 23) durch netzspezifische Signalisierungsmittel auf SIM-Karten, Firmware- und/oder Applet-/Script-Basis realisiert sind.

8. Telekommunikationsnetz nach einem der vorangehenden Ansprüche,
**dadurch gekennzeichnet, dass**
der Server (S) als Zwischenstation beim Laden von Software und/oder Daten auf ein erstes Endgerät (MS1) von einem zweiten Endgerät (MS2) im Telekommunikationsnetz (GSM) oder von einem Daten-Endgerät (PC) in einem mit dem Telekommunikationsnetz verknüpften Datennetz (IPN) wirkt.

9. Telekommunikationsnetz nach einem der vorangehenden Ansprüche,
**dadurch gekennzeichnet, dass**
der Server (S) eine Validierungs-Speichereinheit (39) zur Speicherung von Gültigkeits- und/oder Berechtigungsdaten in Zuordnung zu vorbestimmten Konfigurationscodes und eine mit dieser Speichereinheit verbundene Vergleichereinheit (41) aufweist, die die von Endgeräten übermittelten Konfigurationscodes mit gespeicherten Konfigurationscodes zur Bestimmung der Gültigkeit von in den Endgeräten gespeicherten Software- und/oder Datenbeständen und/oder der Nutzungsberechtigung des jeweiligen Nutzers vergleicht.

10. Telekommunikationsnetz nach einem der vorangehenden Ansprüche,
**dadurch gekennzeichnet, dass**
in den Endgeräten (MS1, MS2) implementierte oder in diese herunterladbare Software- und/oder Datenbestände Applikationszählerelemente (7a) aufweisen und der Server (S) eine arithmetische Auswertungseinheit (33) zur Auswertung der Zählerstände der Applikationszählerelemente zu vorbestimmten Zeitpunkten oder in vorbestimmten Zeitabständen oder jeweils beim Einloggen des betreffenden Endgerätes (MS1, MS2) in das Telekommunikationsnetz (GSM) zur nutzungsabhängigen Vergebührung aufweist.

11. Telekommunikationsnetz nach Anspruch 9 oder 10,
**dadurch gekennzeichnet, dass**
der Server (S) eine mit der Vergleichereinheit (41) und/oder der arithmetischen Auswertungseinheit (33) verbundene Zusatzinformations-Übertragungseinheit (35) zur Übertragung von die Gültigkeit implementierter Software und/oder die Nutzungsberechtigung und/oder den Applikationszählerstand betreffenden Nachrichten für den jeweiligen Nutzer an die Endgeräte und die Endgeräte (MS1, MS2) Zusatzinformations-Empfangs- und -Anzeigeeinheiten (31, 19) zum Empfang und zur Darstellung dieser Nachrichten
aufweisen.

12. Telekommunikationsnetz nach einem der vorangehenden Ansprüche,
**dadurch gekennzeichnet, dass**
die auf die Endgeräte (MS1, MS2) herunterladbare Software Softwarekomponenten und/oder Daten zur Implementierung von nicht netzgebundenen Zusatzfunktionen des Endgerätes aufweisen.

13. Telekommunikationsnetz nach einem der vorangehenden Ansprüche,
**dadurch gekennzeichnet, dass**
die auf die Endgeräte (MS1, MS2) herunterladbare Software und/oder Daten Softwarekomponenten und/oder Daten zur Implementierung von im Telekommunikationsnetz oder in einem mit diesem verbundenen Datennetz verfügbaren Zusatzdiensten aufweisen.

14. Telekommunikationsnetz nach einem der vorangehenden Ansprüche,
**dadurch gekennzeichnet, dass**
die auf die Endgeräte (MS1, MS2) herunterladbare Software und/oder Daten Aktualisierungs-Software und/oder -Daten zum Updating von im Endgerät gespeicherten Software- und/oder Datenbeständen aufweisen.

15. Verfahren zum Betrieb eines Telekommunikationsnetzes, bei dem
- in einem Abfrageschritt beim Einloggen in das Telekommunikationsnetz oder zu vorbestimmten Zeitpunkten bzw. in vorbestimmten Zeitabständen aktuelle Hard- und Softwarekonfigurationen eines Endgerätes abgefragt werden,
- in einem Übertragungsschritt die aktuelle Hard- und Softwarekonfiguration des jeweiligen Endgerätes an einen zentralen Server übermittelt wird,
- aufgrund der übermittelten Hard- und Softwarekonfiguration im Server eine Angebotsinformation für einen Nutzer des Endgerätes erstellt und an das Endgerät übermittelt wird,
- im Rahmen einer interaktiven Menüführung im Endgerät die Angebotsinformationen zusammen mit einer Auswahl- bzw. Ablehnungsaufforderung angezeigt und ein vom Nutzer erzeugtes Anforderungs- bzw. Ablehnungssignal des Nutzers registriert wird,
- zusammen mit der Angebotsinformation Vergebührungsmodussignale an das Endgerät übertragen und im Rahmen der interaktiven Menüführung zusammen mit der Angebotsinformation zur Auswahl durch den Nutzer angezeigt und im Server ein Vergebührungsmodus im Ansprechen an eine vom Nutzer getroffene Auswahl registriert wird, und
- im Ansprechen an das registrierte Anforderungs- bzw. Ablehnungssignal für das Endgerät paßfähige und auf diesem noch nicht vorhandene Software und/oder Daten vom Server in das Endgerät heruntergeladen werden.

16. Verfahren nach Anspruch 15,
**dadurch gekennzeichnet, dass**
beim Einloggen der Endgeräte in das Telekommunikationsnetz oder zu vorbestimmten Zeitpunkten bzw. in vorbestimmten Zeitabständen in den Endgeräten implementierte Software und/oder Daten zur Backup- oder Sicherheitsspeicherung an den Server und bei Eintritt einer vorbestimmten Bedingung von diesem zurück an die Endgeräte übertragen werden.

17. Verfahren nach Anspruch 15 oder 16,
**dadurch gekennzeichnet, dass**
Ablehnungssignale und/oder Anforderungssignale im Server endgeräte-individuell gespeichert werden und nachfolgende Angebotsinformationen unter Nutzung der gespeicherten Ablehnungs- und/oder Anforderungssignale als Filter erstellt werden.

18. Verfahren nach einem der Ansprüche 15 bis 17,
**dadurch gekennzeichnet, dass**
der Server als Zwischenstation beim Laden von Software und/oder Daten auf ein erstes Endgerät von einem zweiten Endgerät in dem Telekommunikationsnetz oder einem Daten-Endgerät in einem mit dem Telekommunikationsnetz verknüpften Datennetz eingesetzt wird.

19. Verfahren nach einem der Ansprüche 15 bis 18,
**dadurch gekennzeichnet, dass**
im Server Gültigkeits- und/oder Berechtigungsdaten in Zuordnung zu vorbestimmten Konfigurationscodes gespeichert und mit von Endgeräten übermittelten Konfigurationscodes verglichen werden und im Ergebnis des Vergleichs Daten ausgegeben und insbesondere an die Endgeräte übertragen werden, die die Gültigkeit von in den Endgeräten gespeicherten Software- und/oder Datenbeständen und/oder die Nutzungsberechtigung des jeweiligen Nutzers betreffen.

20. Verfahren nach einem der Ansprüche 15 bis 19,
**dadurch gekennzeichnet, dass**
in dem Server jeweils beim Einloggen eines Endgerätes oder zu vorbestimmten Zeitpunkten bzw. in vorbestimmten Zeitabständen der Zählerstand von Applikationszählerelementen der in den Endgeräten implementierten Software- und/oder Datenbestände zur Ausführung einer nutzungsabhängigen Vergebührung ausgewertet werden, wobei das Auswertungsergebnis insbesondere auch an die Endgeräte übertragen wird.

## Claims

1. Telecommunication network (GSM), having a plurality of user terminals (MS1, MS2) with a respective predetermined hardware and software configuration and a central server (S) associated with an access or service provider, where
the server (S) has polling means (3) for polling the hardware and software configurations of the terminals and software transmission means (29) for loading software and/or data aligned with the ascertained hardware and software configurations onto the terminals, and
the terminals (MS1, MS2) have response transmission means (5) for transmitting a configuration code denoting the hardware and software configurations to the server in response to a polling operation from the polling means and software reception means (31) for receiving and for internally storing transmitted software and/or data,
the polling means and the response transmission means are designed to poll the hardware and software configurations and to transmit the configuration code when the terminal logs into the telecommunication network or at predetermined times or at predetermined intervals of time, and
the server and the terminals are provided with distributed control means (15 to 23) for implementing interactive control of the server transmission means,
**characterized in that**
the distributed control means (15 to 23) are designed for interactively determining a billing mode for downloaded software and/or data.

2. Telecommunication network according to Claim 1,
**characterized in that**
the distributed control means (15 to 23) are connected by the server (S) to an offer memory (27), which can be addressed by means of the configuration code, having a plurality of offer memory areas listing a respective software and/or data offer aligned with a specific hardware and software configuration, and have
- offer transmission means (15) for transmitting the memory content of the respectively addressed offer memory area to a terminal which has transmitted a configuration code, and
- a transmission trigger unit (23) for activating the server transmission means for loading software and/or data from the aligned software and/or data offer, and also, on the part of the terminals (MS1, MS2),
- offer display means (19) for displaying the memory content of the respectively addressed offer memory area, and
- requesting means (21) for selecting offered software and/or data for loading onto the terminal which output a request signal for wanted software and/or data or a rejection signal for unwanted software and/or data to the server's transmission trigger unit.

3. Telecommunication network according to Claim 2,
**characterized in that**
the server (S) has rejection-signal storage means (13) for the terminal-specific storage of rejection signals in each case in association with transmitted software and/or data offers, where the rejection-signal storage means are associated with the output side of the offer memory (27) as filter means such that software and/or data offers acknowledged with a rejection signal are not repeatedly offered to the same user.

4. Telecommunication network according to one of the preceding claims,
**characterized in that**
the distributed control means (15 to 23) are connected by the server (S) to a billing-mode memory (11) which is associated with the offer memory (27) and stores at least one billing mode for every piece of software offered or for every data record offered, and have
- billing-mode transmission means (15) which are connected to the billing-mode memory and respond to the receipt of a configuration code or of a request signal, and also, on the part of the terminals (MS1, MS2),
- billing-mode display means (19) for displaying the at least one billing mode for the offered or selected software and/or for the offered or selected data, and
- billing-mode confirmation means for stipulating the or a billing mode.

5. Telecommunication network according to one of the preceding claims,
**characterized in that**
the server (S) has a terminal operating-data memory (47) having a plurality of memory areas for terminal-specific backup or safety storage of software and/or data implemented in terminals (MS1, MS2) and also has operating-data reception and transmission means (29, 45), connected to said terminal operating-data memory, for transmitting this software and/or these data from and to the terminals,
and the terminals (MS1, MS2) have operating-data transmission and reception means (31, 43) for transmitting this software and/or these data to and from the server.

6. Telecommunication network according to Claim 5,
**characterized in that**
the operating-data reception and transmission means (29, 31, 43, 45) in the server (S) and in the terminals (MS1, MS2) are connected to the distributed control means (15 to 23) for implementing the interactive control such that backup or safety data storage in the server is effected only after a corresponding offer has been selected by the user of the terminal.

7. Telecommunication network according to one of the preceding claims,
**characterized in that**
the distributed control means (15 to 23) are provided by network-specific signalling means on SIM cards, firmware and/or applet/script basis.

8. Telecommunication network according to one of the preceding claims,
**characterized in that**
the server (S) acts as an intermediate station when loading software and/or data onto a first terminal (MS1) from a second terminal (MS2) in the telecommunication network (GSM) or from a data terminal (PC) in a data network (IPN) linked to the telecommunication network.

9. Telecommunication network according to one of the preceding claims,
**characterized in that**
the server (S) has a validation memory unit (39) for storing validity and/or authorization data in association with predetermined configuration codes and a comparator unit (41) which is connected to this memory unit and compares the configuration codes transmitted by terminals with stored configuration codes in order to determine the validity of software and/or data inventories stored in the terminals and/or the respective user's use authorization.

10. Telecommunication network according to one of the preceding claims,
**characterized in that**
software and/or data inventories which are implemented in or can be downloaded to the terminals (MS1, MS2) have application counter elements (7a), and the server (S) has an arithmetic evaluation unit (33) for evaluating the counter readings on the application counter elements at predetermined times or at predetermined intervals of time or whenever the terminal (MS1, MS2) in question logs into the telecommunication network (GSM) for the purpose of use-dependent billing.

11. Telecommunication network according to Claim 9 or 10,
**characterized in that**
the server (S) has a supplementary-information transmission unit (35), connected to the comparator unit (41) and/or to the arithmetic evaluation unit (33), for transmitting messages relating to the validity of implemented software and/or the use authorization and/or the application counter reading for the respective user to the terminals, and the terminals (MS1, MS2) have supplementary-information reception and display units (31, 19) for receiving and displaying these messages.

12. Telecommunication network according to one of the preceding claims,
**characterized in that**
the software which can be downloaded to the terminals (MS1, MS2) has software components and/or data for implementing supplementary functions of the terminal which are not network-linked.

13. Telecommunication network according to one of the preceding claims,
**characterized in that**
the software and/or data which can be downloaded to the terminals (MS1, MS2) have software components and/or data for implementing supplementary services which are available in the telecommunication network or in a data network connected thereto.

14. Telecommunication network according to one of the preceding claims,
**characterized in that**
the software and/or data which can be downloaded to the terminals (MS1, MS2) have update software and/or data for updating software and/or data inventories stored in the terminal.

15. Method for operating a telecommunication network, in which
- in a polling step, when logging into the telecommunication network or at predetermined times or at predetermined intervals of time, current hardware and software configurations for a terminal are polled,
- in a transmission step, the current hardware and software configurations of the respective terminal are transmitted to a central server,
- on the basis of the transmitted hardware and software configurations, the server creates offer information for a user of the terminal and transmits it to the terminal,
- as part of interactive menu guidance in the terminal, the offer information is displayed together with a selection or rejection request, and a request or rejection signal from the user, which the user has generated, is registered,
- together with the offer information, billing-mode signals are transmitted to the terminal and, as part of the interactive menu guidance, are displayed together with the offer information for selection by the user, and the server registers a billing mode in response to a selection made by the user, and
- in response to the registered request or rejection signal, software and/or data which can be supplied to the terminal and are not yet present thereon are downloaded to the terminal from the server.

16. Method according to Claim 15,
**characterized in that**
when the terminals log into the telecommunication network or at predetermined times or at predetermined intervals of time, software and/or data implemented in the terminals are transmitted to the server for backup or safety storage and are transmitted back to the terminals from said server when a predetermined condition appears.

17. Method according to Claim 15 or 16,
**characterized in that**
rejection signals and/or request signals are stored in the server on a terminal-specific basis, and subsequent offer information is created using the stored rejection and/or request signals as filters.

18. Method according to one of Claims 15 to 17,
**characterized in that**
the server is used as an intermediate station when loading software and/or data onto a first terminal from a second terminal in the telecommunication network or a data terminal in a data network linked to the telecommunication network.

19. Method according to one of Claims 15 to 18,
**characterized in that**
the server stores validity and/or authorization data in association with predetermined configuration codes and compares them with configuration codes transmitted by terminals, and, as the result of the comparison, data concerning the validity of software and/or data inventories stored in the terminals and/or the respective user's use authorization are output and are transmitted to the terminals, in particular.

20. Method according to one of Claims 15 to 19,
**characterized in that**
whenever a terminal logs in or at predetermined times or at predetermined intervals of time, the server evaluates the counter reading on application counter elements in the software and/or data inventories implemented in the terminals in order to perform use-dependent billing, with the evaluation result also being transmitted to the terminals, in particular.

## Revendications

1. Réseau de télécommunication (GSM), comportant plusieurs terminaux (MS1, MS2) d'utilisateurs ayant respectivement une configuration matérielle et logicielle prédéterminée et un serveur central (S) d'un fournisseur d'accès ou de services,
dans lequel le serveur (S) comporte des moyens d'interrogation (3) pour interroger les configurations matérielles et logicielles des terminaux et des moyens de transmission de logiciel (29) pour charger des logiciels et/ou des données adaptés à la configuration matérielle et logicielle déterminée sur les terminaux,
dans lequel les terminaux (MS1, MS2) comportent des moyens de transmission de réponse (5) pour transmettre un code de configuration caractérisant la configuration matérielle et logicielle au serveur en réponse à une interrogation des moyens d'interrogation et des moyens de réception de logiciel (31) pour recevoir et pour mémoriser en interne des logiciels et/ou données transmis,
dans lequel les moyens d'interrogation et les moyens de transmission de réponse sont conçus pour interroger la configuration matérielle et logicielle et pour transmettre le code de configuration lors de l'entrée en communication du terminal dans le réseau de télécommunication ou à des instants prédéterminés ou à intervalles prédéterminés
et dans lequel des moyens de commande (15 à 23) répartis dans le serveur et dans les terminaux sont prévus pour mettre en oeuvre une commande interactive des moyens de transmission de serveur,
**caractérisé par le fait que** les moyens de commande répartis (15 à 23) sont conçus pour la détermination interactive d'un mode de taxation pour des logiciels et/ou des données chargés.

2. Réseau de télécommunication selon la revendication 1,
**caractérisé par le fait que** les moyens de commande répartis (15 à 23),
du côté du serveur (S),
sont reliés à une mémoire d'offres (27) qui est adressable par l'intermédiaire du code de configuration et qui comprend plusieurs zones de mémoire d'offres dans chacune desquelles une offre de logiciels et/ou de données adaptée à une configuration matérielle et logicielle spécifique est enregistrée
et comportent
- des moyens de transmission d'offre (15) pour transmettre le contenu de la zone de mémoire d'offre respectivement adressée à un terminal qui a transmis un code de configuration
- et une unité de déclenchement de transmission (22) pour activer les moyens de transmission de serveur afin de charger des logiciels et/ou des données de l'offre de logiciels et/ou de données adaptée,
et, du côté des terminaux (MS1, MS2),
comportent
- des moyens d'affichage d'offre (19) pour afficher le contenu de la zone de mémoire d'offre respectivement adressée
- et des moyens de demande (21) pour sélectionner des logiciels et/ou données offerts en vue du chargement sur le terminal, ces moyens fournissant à l'unité de déclenchement de transmission du serveur un signal de demande pour des logiciels et/ou données souhaités ou un signal de refus pour des logiciels et/ou données non souhaités.

3. Réseau de télécommunication selon la revendication 2,
**caractérisé par le fait que** le serveur (S) comporte des moyens de mémorisation de signal de refus (13) pour mémoriser pour chaque terminal des signaux de refus à chaque fois en relation avec des offres de logiciels et/ou de données transmises, les moyens de mémorisation de signal de refus étant associés à la mémoire d'offres (27) côté sortie comme moyen de filtrage de telle sorte que des offres de logiciels et/ou de données auxquelles un utilisateur a répondu par un signal de refus ne sont pas répétées au même utilisateur.

4. Réseau de télécommunication selon l'une des revendications précédentes,
**caractérisé par le fait que** les moyens de commande répartis (15 à 23),
du côté du serveur (S),
sont reliés à une mémoire de modes de taxation (11) qui est associée à la mémoire d'offres (27) et dans laquelle au moins un mode de taxation est mémorisé pour chaque logiciel ou bloc de données offert
et comportent des moyens de transmission de mode de taxation (15) reliés à la mémoire de modes de taxation et répondant à la réception d'un code de configuration ou d'un signal de demande,
et, du côté des terminaux (MS1, MS2),
comportent des moyens d'affichage de mode de taxation (19) pour afficher le ou les modes de taxation pour les logiciels et/ou données offerts ou sélectionnés
et comportent des moyens de confirmation de mode de taxation pour spécifier le ou un mode de taxation.

5. Réseau de télécommunication selon l'une des revendications précédentes,
**caractérisé par le fait que**
le serveur (S) comporte une mémoire de données d'exploitation de terminaux (47) avec plusieurs zones de mémoire pour la mémorisation de sauvegarde ou de sécurité, propre à chaque terminal, de logiciels et/ou de données installés dans des terminaux (MS1, MS2) ainsi que des moyens de réception et d'émission de données d'exploitation (29, 45) reliés à ladite mémoire en vue de la transmission de ces logiciels et/ou données depuis et vers les terminaux
et les terminaux (MS1, MS2) comportent des moyens d'émission et de réception de données d'exploitation (31, 43) pour la transmission de ces logiciels et/ou données vers et depuis le serveur.

6. Réseau de télécommunication selon la revendication 5,
**caractérisé par le fait que** les moyens de réception et d'émission de données d'exploitation (29, 31, 43, 45) du serveur (S) et des terminaux (MS1, MS2) sont reliés aux moyens de commande répartis (15 à 23) pour la mise en oeuvre de la commande interactive de telle sorte qu'une mémorisation de données de sauvegarde ou de sécurité dans le serveur s'effectue seulement après la sélection d'une offre correspondante par l'utilisateur du terminal.

7. Réseau de télécommunication selon l'une des revendications précédentes,
**caractérisé par le fait que** les moyens de commande répartis (15 à 23) sont réalisés par des moyens de signalisation spécifiques au réseau sur la base de cartes SIM, de microprogrammes et/ou d'appelettes/scripts.

8. Réseau de télécommunication selon l'une des revendications précédentes,
**caractérisé par le fait que** le serveur (S) sert de station intermédiaire lors du chargement de logiciels et/ou de données sur un premier terminal (MS1) depuis un deuxième terminal (MS2) dans le réseau de télécommunication (GSM) ou depuis un terminal de données (PC) dans un réseau de données (IPN) relié au réseau de télécommunication.

9. Réseau de télécommunication selon l'une des revendications précédentes,
**caractérisé par le fait que** le serveur (S) comporte une unité de mémoire de validation (39) pour mémoriser des données de validité et/ou d'autorisation en association avec des codes de configuration prédéterminés et une unité de comparaison (41) qui est reliée à cette unité de mémoire et qui compare les codes de configuration transmis par des terminaux à des codes de configuration mémorisés en vue de la détermination de la validité d'états de logiciels et/ou de données mémorisés dans les terminaux et/ou de l'autorisation d'utilisation de l'utilisateur respectif.

10. Réseau de télécommunication selon l'une des revendications précédentes,
**caractérisé par le fait que** des états de logiciels et/ou de données installés dans les terminaux (MS1, MS2) ou pouvant être téléchargés dans ceux-ci comportent des éléments compteurs d'application (7a) et le serveur (S) comporte une unité d'évaluation arithmétique (33) pour évaluer les états de comptage des éléments compteurs d'application à des instants prédéterminés ou à intervalles prédéterminés ou à chaque entrée en communication du terminal concerné (MS1, MS2) dans le réseau de télécommunication (GSM) en vue de la taxation dépendante de l'utilisation.

11. Réseau de télécommunication selon la revendication 9 ou 10,
**caractérisé par le fait que**
le serveur (S) comporte une unité de transmission d'information supplémentaire (35) qui est reliée à l'unité de comparaison (41) et/ou à l'unité d'évaluation arithmétique (33) et qui est destinée à transmettre aux terminaux des messages concernant la validité de logiciels installés et/ou l'autorisation d'utilisation et/ou l'état de compteurs d'application pour l'utilisateur respectif
et les terminaux (MS1, MS2) comportent des unités de réception et d'affichage d'information supplémentaire (31, 19) pour recevoir et présenter ces messages.

12. Réseau de télécommunication selon l'une des revendications précédentes,
**caractérisé par le fait que** les logiciels pouvant être chargés sur les terminaux (MS1, MS2) comportent des composants logiciels et/ou des données pour la mise en oeuvre de fonctions supplémentaires du terminal qui ne sont pas liées au réseau.

13. Réseau de télécommunication selon l'une des revendications précédentes,
**caractérisé par le fait que** les logiciels et/ou données pouvant être chargés sur les terminaux (MS1, MS2) comportent des composants logiciels et/ou des données pour la mise en oeuvre de services supplémentaires disponibles dans le réseau de télécommunication ou dans un réseau de données relié à celui-ci.

14. Réseau de télécommunication selon l'une des revendications précédentes,
**caractérisé par le fait que** les logiciels et/ou données pouvant être chargés sur les terminaux (MS1, MS2) comportent des logiciels et/ou données d'actualisation pour la mise à jour d'états de logiciels et/ou données mémorisés dans le terminal.

15. Procédé pour l'exploitation d'un réseau de télécommunication, dans lequel
- dans une étape d'interrogation, on interroge des configurations matérielles et logicielles actuelles d'un terminal lors de l'entrée en communication dans le réseau de télécommunication ou à des instants prédéterminés ou à intervalles prédéterminés,
- dans une étape de transmission, on transmet la configuration matérielle et logicielle actuelle du terminal respectif à un serveur central,
- sur la base de la configuration matérielle et logicielle transmise, on élabore dans le serveur une information d'offre pour un utilisateur du terminal et on la transmet au terminal,
- dans le cadre d'une commande par menu interactive dans le terminal, on affiche les informations d'offre conjointement à une question de sélection ou de refus et on enregistre un signal de demande ou de refus, produit par l'utilisateur, de l'utilisateur,
- on transmet au terminal, conjointement à l'information d'offre, des signaux de mode de taxation et, dans le cadre de la commande par menu interactive, on les affiche conjointement à l'information d'offre en vue d'une sélection par l'utilisateur et, dans le serveur, on enregistre un mode de taxation en réponse à une sélection faite par l'utilisateur, et
- en réponse au signal de demande ou de refus enregistré, le serveur charge dans le terminal des logiciels et/ou données adaptés au terminal et non encore présents sur celui-ci.

16. Procédé selon la revendication 15,
**caractérisé par le fait que**, lors de l'entrée en communication des terminaux dans le réseau de télécommunication ou à des instants prédéterminés ou à intervalles prédéterminés, on transmet au serveur des logiciels et/ou données installés dans les terminaux en vue d'une mémorisation de sauvegarde ou de sécurité et, lorsqu'une condition prédéterminée est satisfaite, on les retransmet du serveur aux terminaux.

17. Procédé selon la revendication 15 ou 16,
**caractérisé par le fait qu'**on mémorise des signaux de refus et/ou des signaux de demande dans le serveur pour chaque terminal et on élabore des informations d'offre suivantes en exploitant comme filtre les signaux de refus et/ou de demande mémorisés.

18. Procédé Selon l'une des revendications 15 à 17,
**caractérisé par le fait qu'**on utilise le serveur comme station intermédiaire lors du chargement de logiciels et/ou de données sur un premier terminal depuis un deuxième terminal dans le réseau de télécommunication ou depuis un terminal de données dans un réseau de données relié au réseau de télécommunication.

19. Procédé selon l'une des revendications 15 à 18,
**caractérisé par le fait que**, dans le serveur, on mémorise des données de validité et/ou d'autorisation en association avec des codes de configuration prédéterminés et on les compare avec des codes de configuration transmis par des terminaux et, comme résultat de la comparaison, on fournit et transmet notamment aux terminaux des données qui concernent la validité d'états de logiciels et/ou de données mémorisés dans les terminaux et/ou l'autorisation d'utilisation de l'utilisateur respectif.

20. Procédé selon l'une des revendications 15 à 19,
**caractérisé par le fait que**, dans le serveur, lors de l'entrée en communication des terminaux dans le réseau de télécommunication ou à des instants prédéterminés ou à intervalles prédéterminés, on évalue l'état de comptage d'éléments compteurs d'application des états de logiciels et/ou de données installés dans les terminaux en vue de la réalisation d'une taxation dépendante de l'utilisation, le résultat d'évaluation étant aussi transmis notamment aux terminaux.
